Europäisches Patentamt

European Patent Office

Office européen des brevets

(19)

(11) **EP 1 329 846 A1**

(12) **DEMANDE DE BREVET EUROPEEN**

(43) Date de publication:
23.07.2003 Bulletin 2003/30

(51) Int Cl.[7]: **G06T 1/00**

(21) Numéro de dépôt: 02290111.0

(22) Date de dépôt: 16.01.2002

(84) Etats contractants désignés:
**AT BE CH CY DE DK ES FI FR GB GR IE IT LI LU
MC NL PT SE TR**
Etats d'extension désignés:
**AL LT LV MK RO SI**

(71) Demandeur: **Astrium SAS
78146 Velizy-Villacoublay (FR)**

(72) Inventeurs:
• **Paleologue, Alexandre
31450 Fourquevaux (FR)**
• **Boulogne, Laurent
31570 Saint Foy d'Aigrefeuille (FR)**

(74) Mandataire: **Fort, Jacques
CABINET PLASSERAUD
84, rue d'Amsterdam
75440 Paris Cedex 09 (FR)**

(54) **Dispositif de detection de cible ponctuelle utilisant un traitement d'images spatio-temporel**

(57)    Le dispositif permet de détecter une cible pouvant être sensiblement ponctuelle, présentant des caractéristiques radiométriques connues. Ce dispositif comprend un appareil optique monté sur un satellite d'observation de la terre et fournissant des images successives présentant un recouvrement mutuel dans le sens du déplacement du satellite, utilisant comme capteur une matrice (12) de sites photosensibles. Des moyens pour analyser les images fournies par l'appareil en vue de localiser les cibles comprennent des moyens de filtrage temporel et de filtrage spatial implantés sur la matrice elle même en amont de moyens (32) de détection par comparaison des caractéristiques résultant du filtrage avec des critères extérieurs.

**FIG. 1**

EP 1 329 846 A1

**EP 1 329 846 A1**

## Description

Le présente invention a pour objet un dispositif de détection de cible pouvant être sensiblement ponctuelle, présentant des caractéristiques radiométriques connues, ce dispositif comprenant :

un appareil optique monté sur un satellite d'observation de la terre et fournissant des images successives présentant un recouvrement mutuel dans le sens du déplacement du satellite, l'appareil optique utilisant comme capteur une matrice de sites photosensibles ;
et des moyens pour analyser les images fournies par l'appareil en vue de localiser les cibles.

L'invention trouve une application particulièrement importante dans le cas où l'appareil optique comprend, en amont de la matrice de sites photosensibles, qui est souvent désigné par le terme "plan focal", des moyens de dispersion spectrale d'une onde plane incidente dans une direction privilégiée de la matrice, et cela dans tout le champ o'observation. En ce qui concerne de tels moyens de dispersion on pourra par exemple se reporter à la demande de brevet N° FROO 13626.

A l'heure actuelle, en vue d'obtenir une résolution et une sélectivité élevées, on utilise souvent des matrices ayant un nombre de sites photosensibles supérieur au million. Il se pose alors le problème d'identifier une cible qui peut correspondre à un seul pixel de l'image obtenue, et cela avec un taux de fausses alarmes très faible.

Une solution permettant d'utiliser des moyens très puissants d'analyse des images consiste à acquérir et mémoriser la totalité de chaque image et à transmettre les images vers le sol, où le poids et la complexité des moyens de traitement ne pose pas de problème majeur. Mais le satellite n'est alors pas autonome du point de vue de la détection. La surveillance continue n'est pas possible en pratique, du fait que le nombre des stations de réception et de traitement est forcément limité. La couverture de surveillance n'est en conséquence que moyenne et les renseignements ne sont obtenus qu'avec du retard.

Une autre solution consiste à effectuer la totalité du traitement à bord, en acquérant la totalité de chaque image, en mémorisant cette image et en la traitant ensuite pour extraire l'adresse du ou des pixels correspondant aux critères de détection (radiométrie et éventuellement durée d'émission répondant aux caractéristiques recherchées). Pour obtenir une cadence de mesure satisfaisante, il faut alors avoir des fréquences d'acquisition de pixels très élevées et des chaînes de traitement performantes compactes, afin de traiter correctement les signaux identifiant chaque pixel provenant de la matrice. Ces chaînes sont complexes et volumineuses.

La présente invention vise à fournir un dispositif permettant de conserver les avantages des dispositifs connus de traitement d'images à bord, tout en réduisant très notablement la complexité des circuits de traitement reliés au capteur en leur envoyant uniquement les adresses correspondant à une détection réelle. En d'autres termes, l'invention vise à assurer une compression de l'information élevée, avant transmission aux circuits de traitement.

Dans ce but, l'invention propose notamment un dispositif de détection du genre ci-dessus défini, caractérisé en ce que des moyens de filtrage temporel et de filtrage spatial sont implantés sur la matrice en amont de moyens de détection par comparaison des caractéristiques résultant du filtrage avec des critères extérieurs.

Avantageusement, les fonctions de filtrage temporel et de filtrage spatial sont couplées pour identifier les cibles ponctuelles réelles et écarter dans une large mesure les fausses alarmes.

En résumé, le dispositif suivant l'invention permet, à partir d'un traitement temporel et spatial, d'extraire l'adresse des cibles remplissant les critères de détection fixés à l'avance, et notamment des critères radiométriques et éventuellement temporels. Pour cela, le dispositif suivant l'invention effectue un traitement différentiel, avantageusement au niveau du pixel, et un traitement analogique spatial effectué en parallèle sur celui des côtés de la matrice qui permet une lecture en parallèle. La radiométrie est obtenue, sous forme numérique, par une simple conversion analogique numérique pouvant être faite à proximité immédiate de la zone photosensible de la matrice.

Dans un mode avantageux de réalisation, la matrice comporte, en plus des sites photosensibles de détection, des zones de pixels masqués permettant de mesurer le résidu du traitement spatio-remporel, le résidu de soustraction temporelle en obscurité, le résidu de traitement spatial en obscurité et/ou le courant d'obscurité. Elle peut comporter également, en plus des sites photosensibles de détection et éventuellement des zones de sites masqués, des zones de pixels non masqués permettant de mesurer la contribution des résidus de traitement temporel sous luninance, la contribution des résidus de traitement spatial sous luninance et / ou le bruit et la dynamique des sites photosensibles sous luminance.

L'invention est applicable quel que soit le mode de formation des images. Toutefois, elle est particulièrement adaptée au mode d'acquisition d'image dit "line scan" ou à balayage par ligne, qui autorise une observation continue de la scène, et cela grâce à un traitement en parallèle des données fournies par la matrice.

Les caractéristiques ci-dessus ainsi que d'autres apparaîtront mieux à la lecture de la description qui suit d'un mode particulier de réalisation, donné à titre d'exemple non limitatif.

La description se réfère aux dessins qui l'accompagnent, dans lesquels :

- la figure 1 est un schéma de principe montrant l'architecture fonctionnelle de la matrice de sites photosensibles et des composants qui sont directement implantés sur elle ;
- la figure 2 montre un mode possible d'intégration et de lecture de la zone photosensible de la matrice dans lequel la matrice est lue ligne par ligne (line scan);
- la figure 3 est un chronogramme fonctionnel montrant une séquence possible des opérations de filtrage temporel et de filtrage spatial ;
- la figure 4 est un synoptique montrant une implantation possible du filtrage spatial, en fonctionnement ligne par ligne ;
- la figure 5, similaire à la figure 4, montre une implantation en colonne ;
- la figure 7 montre une implantation possible des fonctions de mémorisation et de seuillage avantageusement intégrées au dispositif ;
- la figure 8 est un synoptique montant les opérations de filtrage numérique et d'encodage visant à compresser l'information numérique en cas de détection.

On ne décrira pas ici les éléments purement optiques et dispersifs du dispositif de détection effectuant une dispersion spectrale, étant donné qu'ils peuvent être d'un genre connu, par exemple tels que ceux décrits dans le document US-A-6 084 659 qo, mieux, la demande de brevet déjà mentionnée. On supposera par la suite que la matrice comporte une zone photosensible de M x N sites, répartis à un pas compris entre 15 et 22 $\mu$m. Souvent on aura M = N.

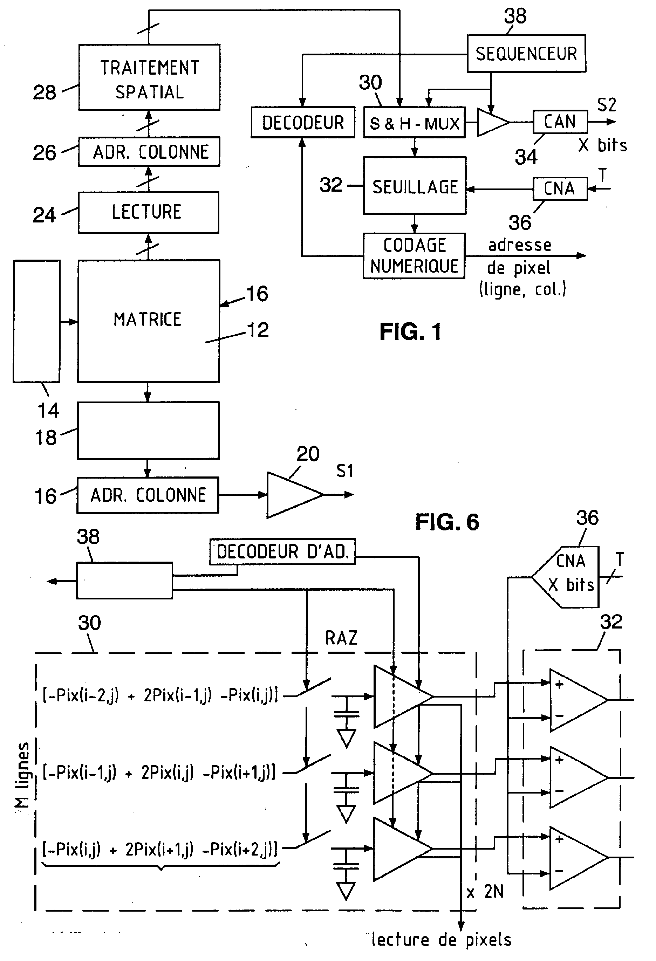

La figure 1 montre une telle matrice 10 comportant une zone photosensible 12 de N colonnes et M lignes de sites photosensibles (par exemple 2000 x 2000).

Un circuit d'adressage de lignes 14 est prévu sur un côté de la matrice 12 et sur le même substrat. Pour permettre une lecture de la matrice par un procédé classique, il est prévu un premier circuit 16 d'adressage de colonnes, associé à un circuit de lecture 18, avantageusement prévu de façon à limiter le bruit. Ce circuit de lecture peut notamment être du type décrit dans la demande de brevet français n°9908001 (CIMI et Ecole Nationale Supérieure de l'Aéronautique et de l'Espace). Un amplificateur 20 réalise une lecture de la matrice qui peut être soit aléatoire, soit en série et fournit les informations sur une sortie S1.

Il est possible de prévoir également, sur le substrat, une zone ne participant pas à la fonction de détection permettant d'implanter des fonctions de test qui seront décrites plus loin.

Le dispositif est prévu pour réaliser une fonction de filtrage temporel, par soustraction d'images en mode jointif, rendue possible par le balayage dû au déplacement du satellite. Cette fonction de filtrage est effectuée au niveau de chaque pixel, sur la matrice 12 elle-même. Un circuit de lecture 24 similaire au circuit 18 permet d'adresser les informations obtenues par la fonction de filtrage temporel à un circuit d'adressage de colonne 26 similaire au circuit 16. Les informations transférées par l'intermédiaire du circuit d'adressage 26 sont envoyées à un circuit de traitement spatial 28, également implanté sur le substrat de la matrice. D'autres fonctions encore sont implantées sur le même substrat que la matrice, à proximité de celle-ci. Les circuits additionnels représentés sur la figure 1 comprennent un échantillonneur-bloqueur 30 remplissant également un rôle de multiplexeur, un étage 32 de discrimination par seuillage, un convertisseur analogique-numérique 34 et un convertisseur numérique analogique 36, ainsi qu'un séquenceur 38 commandant la succession des opérations.

Les signaux de sortie du circuit de traitement spatial 28 parviennent à l'échantillonneur-bloqueur 30 par une liaison parallèle 40. Les données radiométriques sont disponibles, avec une quantification qui dépend du nombre de bits du convertisseur analogique-numérique 34, sur une sortie S2. Un codeur numérique d'adresse 35 fournit celle-ci sur une sortie S3 . Le convertisseur numérique analogique 36 reçoit un mot de plusieurs bits sélectionné depuis l'extérieur et identifiant le seuil T utilisé par l'étage de seuillage 32. Un décodeur 37, sur 12 bits dans le cas d'une matrice à M x N = 2000 x 2000 sites, reçoit la commande du séquenceur et la sortie du codeur numérique 35.

L'implantation de l'ensemble des circuits ci-dessus sur le même substrat que la matrice peut être assuré soit de façon monolithique, soit par hybridation, la liaison étant prévue pour permettre un traitement en parallèle des données.

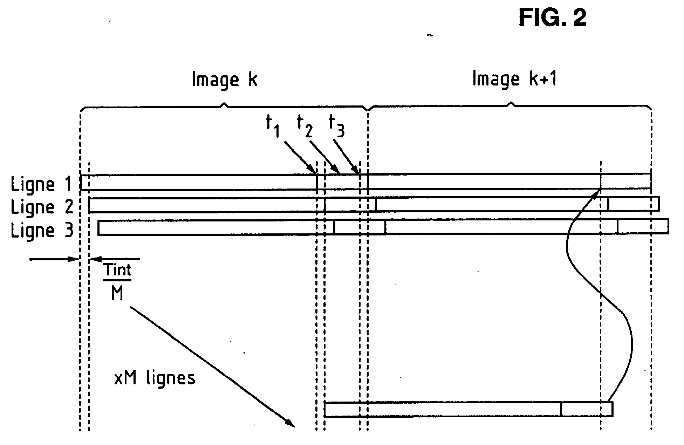

Le mode de traitement en parallèle sur les N pixels d'une même ligne de la zone photosensible est schématisé sur la figure 2. Cette figure 2 montre l'échelonnement des opérations d'intégration de lumière, de transfert et de lecture avec intégration et lecture du type à balayage ligne par ligne ou "line scan". Cet échelonnement est adopté pour un dispositif monté sur un satellite et est à prise de vue progressive ou "pushbroom" et non pas par photos instantanées.

Sur la figure 2, les opérations effectuées sur les N pixels de chaque ligne sont montrées, pour l'ensemble de l'image k et pour une fraction de l'image k+1. Le balayage par lignes permet une observation continue de la scène à une ligne près, puisque seule la ligne en cours de transfert et de traitement n'intègre pas de charges à un instant donné.

Les lignes voient la scène à des instants mutuellement décalés d'un intervalle T/M, T étant la durée de formation d'une image complète et M étant le nombre de lignes.

Pour la ligne 1 par exemple, on trouve successivement un intervalle d'intégration de charges, un intervalle de transfert commençant à l'instant t1, un intervalle de lecture et de traitement commençant à l'instant t2 et une remise à zéro à l'instant t3.

Le mode de lecture montré en figure 2 est en lui-même connu. Pour la mise en oeuvre de l'invention, il est complété par un processus utilisant un algorithme de traitement du genre donné dans le tableau I ci-dessous :

Tableau I

| Etape 1 | Soustraction en mode jointif, effectué dans le pixel |
|---------|------------------------------------------------------|
| Etape 2 | Filtrage spatial Laplacien |
| Etape 3 | Mémorisation des N pixels analogiques de la ligne par un échantillonneur-bloqueur |
| Etape 4 | Seuillage en 32 des N pixels de la ligne par comparaison à un seuil analogique programmé |
| Etape 5 | Encodage numérique du mot résultant de l'étape de seuillage |
| Etape 6 | Relecture analogique et conversion de la radiométrie de la "cible" détectée |

Le filtrage spatial utilise un Laplacien qui est choisi en fonction des performances requises. On peut notamment utiliser un Laplacien à trois coefficients, par exemple -1/2/-1. Il peut être appliqué dans la direction perpendiculaire à celle du codage ou dans la direction parallèle à celle du codage.

Dans certains cas, on sera amené à adopter une fonction de type Laplacien à davantage de coefficients, par exemple cinq.

**Etape 1 : Soustraction.**

Cette étape est effectuée au niveau de chaque pixel. Elle est prévue pour fournir une différence d'information entre deux instants successifs pour un même pixel. Cette opération est effectuée en mode jointif, plutôt qu'en mode glissant.

La soustraction minimise les effets de la non-uniformité de réponse des pixels et réduit les structures d'image invariantes et les bruits fixes de la scène observée par le dispositif. Elle augmente en conséquence le contraste des cibles éventuelles par rapport au fond de la scène.

La soustraction ne doit pas présenter des résidus apportant des erreurs supplémentaires, telles que les bruits temporels, des dérives dues à la température ou des biais qui pourraient être supérieurs aux effets favorables de la soustraction.

L'opération de soustraction ne nécessite qu'une durée de rétention très courte de l'information analogique contenue dans le pixel, au plus égale à la durée Tint du temps d'intégration de lumière.

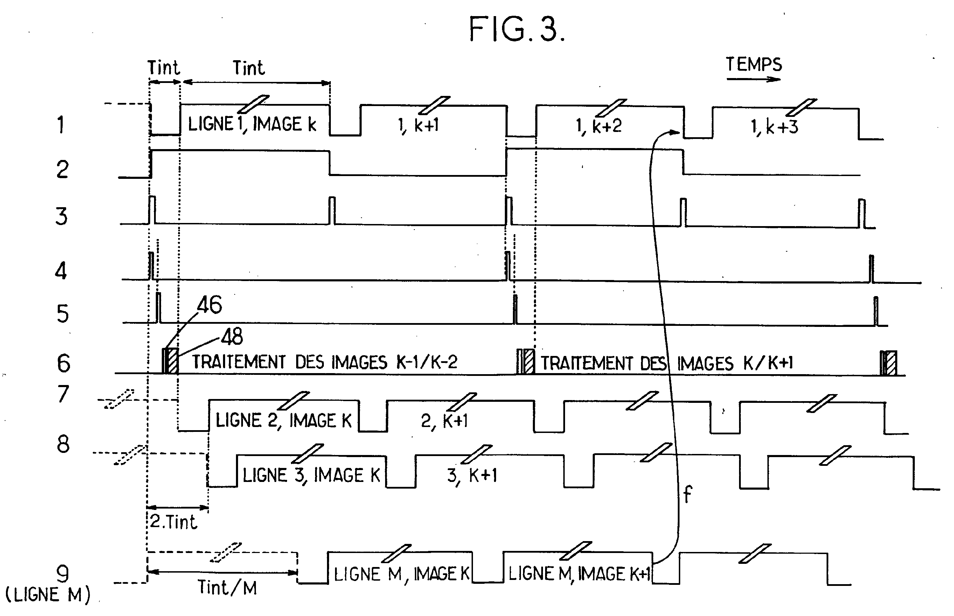

Le chronogramme du traitement temporel peut être celui montré en figure 3 dont les lignes successives 1 à 9 correspondent à des opérations temporelles et spatiales qui seront décrites ci-après.

Il est important de relever que le filtrage temporel, effectué par des moyens implantés sur le substrat, travaille en parallèle sur l'ensemble des lignes d'un couple d'images, ce qui permet un fonctionnement en mode à balayage par lignes ou "line scan" autorisant une observation continue de la scène.

**Etape 2 : filtrage spatial.**

Le filtrage spatial, effectué dans le circuit 28 de la figure 1, traite les N pixels d'une même ligne en parallèle. Les données d'entrée du Laplacien sont sous forme analogique. Elles représentent déjà des résultats de soustraction temporelle. Le circuit fourni en sortie N pixels ayant tous subi la même fonction de transfert. Les lignes successives de la figure 3 montrent:

1. Durées d'intégration T int sur la ligne 1 des images successives k, k+1, k+2, etc.
2. Adressage des images successives k et k+1.
3. Commande du stockage des charges.
4. Commande de lecture et d'échantillonnage du résultat de la soustraction sur une image paire k.
5. Commande de lecture et d'échantillonnage portant sur les images impaires telles que k+1.
6. Traitement en parallèle, temporel 46 et spatial 48.
7. Temps d'intégration sur la ligne 2 (décalé de T int / M par rapport à la première ligne de la figure).
8. Intégration de la ligne 3 (décalée de T int / M par rapport à la seconde ligne de la figure).

Les mêmes opérations que ci-dessus se poursuivent jusqu'à la ligne M de la matrice , indiquée en 9, puis le traitement se reboucle comme indiqué par la flèche f.

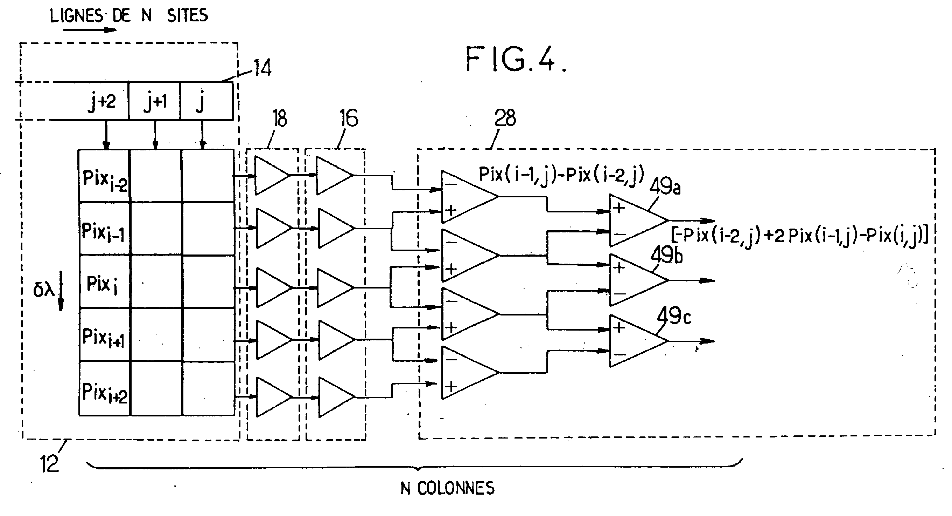

La figure 4 montre un schéma synoptique du traitement spatial appliqué en ligne, en supposant que la dispersion en longueur d'onde s'effectue dans le sens des colonnes, comme indiqué par la flèche $\delta\lambda$. Sur cette figure sont représentés des fragments de 3 lignes adjacentes j, j+1, j+2 de la zone photosensible de la matrice. Cinq pixels successifs, d'ordre i-2 à i+2 sont schématisés. Les signaux lus en 18 et sélectionnés par le circuit d'adressage de colonne 16 sont appliqués au circuit 28 de filtrage spatial. Dans le cas illustré, ce filtrage est à trois coefficients et met en oeuvre deux fois M cellules qui appliquent des coefficients -1, +2 et -1.

Les additionneurs de sortie 42a, 42b et 42c fournissent respectivement:

- -Pix (i-2, j) + 2 Pix (i-1, j) - Pix (i, j)
- - Pix (i-1, j) + 2 Pix (i, j) - Pix (i+1,j)
- - Pix (i, j) + 2 Pix (i+1, j) - Pix (i+2,j)

où Pix désigne la valeur d'un pixel, après différence.

Le mode de lecture en 18 minimisant le bruit fixe de réseau peut être du genre décrit dans la demande de brevet français CIMI - ENSAE à laquelle on pourra se reporter.

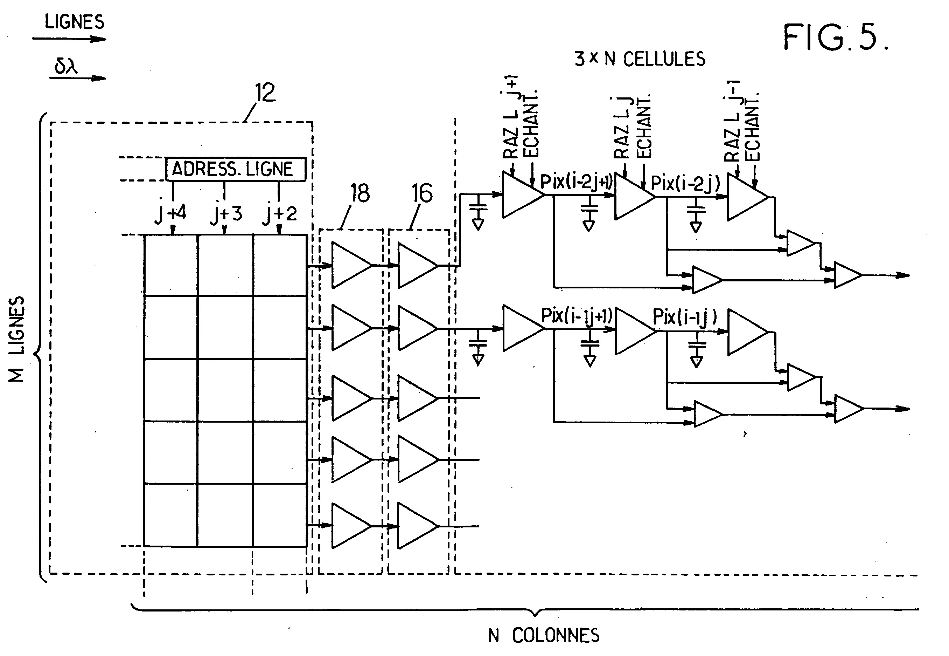

Dans la variante de réalisation montrée en figure 5, l'implantation s'effectue en colonne, la dispersion étant assurée dans le sens des lignes. Une seule cellule élémentaire est représentée. L'implémentation requiert cette fois 3M cellules élémentaires. Chacune de ces cellules comprend une entrée de remise à zéro d'une ligne et une entrée de réception d'un échantillon provenant de cette ligne.

La sortie de chacun des circuits élémentaires est fournie par un additionneur 50 qui fournit, pour la première voie, la valeur :

$$- Pix (i-2, j-1) + 2 Pix (i-2, j) - Pix (i-2, j+1)$$

**Etape 3 : Mémorisation et échantillonnage.**

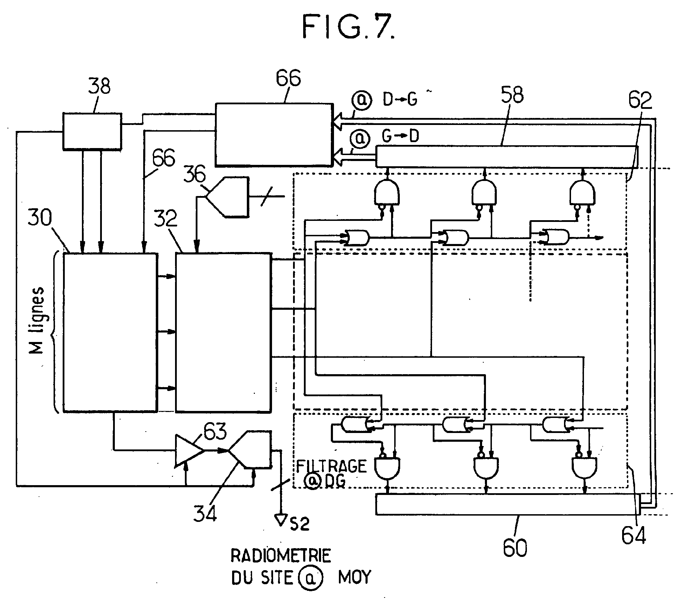

La mémorisation est assurée par le bloc 30 (figures 1 et 6) qui reçoit par exemple les sorties du filtre spatial en lignes montrées en figure 4. Le bloc 30 permet de figer les valeurs analogiques de tous les pixels d'une même ligne pendant une durée permettant réadressage d'une valeur parmi les N valeurs d'une ligne pour la convertir. Le séquenceur 38 fournit les ordres de mémorisation sur une ligne commune 54 ainsi que les ordres de remise à zéro.

La sélection d'adresses est réalisée par un décodeur d'adresses 56.

**Etape 4 : Seuillage.**

La fonction de seuillage est assurée par un étage 32 (figures 1 et 6). Elle permet de transformer l'information analogique mémorisée en 30 en une information numérique sur plusieurs bits par comparaison avec un seuil commun programmable fourni, à partir d'une valeur numérique appliquée depuis l'extérieur, par le convertisseur 36. Ce convertisseur est programmé par exemple par une interface de type parallèle. Ce seuil devra être stable sur la durée de traitement d'une ligne.

**Etape 5 : Codage numérique.**

La fonction de codage numérique peut être réalisée par des circuits du genre montré en figure 7. Elle permet de compresser l'information numérique sortant de l'étage de seuillage 32, sous forme numérique avec codage sur x bits, en un mot de y bits (y étant inférieur à x). Elle effectue cette opération uniquement si l'entropie du mot de x bits est faible. Cette entropie faible peut être décelée par la présence d'un seul bit au niveau 1 par mi les x bits. Si deux bits sont simultanément à 1, alors l'information n'est plus pertinente et le codage est inefficace. L'ensemble de la ligne n'est plus disponible.

Dans un mode avantageux de réalisation, permettant de rendre la matrice résistante à l'effet de tache lumineuse de grand diamètre, donnant des signaux de sortie des sites de niveau élevé, pouvant dépasser le niveau de saturation d'un site photosensible, un filtrage numérique est réalisé dans le cas de la figure 7. Ce filtrage numérique permet d'accepter plusieurs bits au niveau 1 sur une même ligne. Il agglutine plusieurs bits aux niveau 1 faisant partie d'une même tache image.

Cette mesure permet de détecter des cibles donnant naissance à une image dont la dimension est supérieure à celle d'un site photosensible.

Pour cela, le circuit de filtrage montré en figure 7 utilise un double codage. Pour chaque ligne traitée de la zone photosensible, deux adresses sont générées.

Une première adresse, fournie sur une ligne 58, correspond à un filtrage numérique de la gauche vers la droite. Elle permet de détecter le premier bit au niveau 1, c'est-à-dire le front montant de l'image de la cible, à partir de la gauche.

L'autre adresse, fournie sur une ligne 60, correspond à un filtrage numérique de la droite vers la gauche, permettant de détecter le front montant à partir de la droite.

Comme on le verra plus loin, un décodeur 66 calcule l'adresse a moy du pixel milieu entre les fronts montant et descendant et envoie cette adresse à l'échantillonneur-bloqueur 30. Le contenu du site photosensible ainsi sélectionne est adressé à un amplificateur 63 de lecture du pixel correspondant.

Les deux filtrages mettent en oeuvre des circuits 62 et 64 constitués simplement de quelques portes logiques.

**Etape 6 : Conversion analogique numérique et radiométrie (luminance).**

La conversion est réalisée par un circuit 34 de nature classique. Elle permet de convertir la valeur analogique correspondant à la détection d'un bit au niveau 1 en sortie du codage en une donnée numérique, fournissant l'information radiométrique associée à la cible détectée.

L'adresse du site analogique à convertir est calculée par décodage des adresses détectées à la sortie des deux codeurs 62 et 64 permettant d'obtenir l'adresse moyenne entre les adresses fournies par les circuits 58 et 60. L'adresse moyenne est ensuite injectée dans l'échantillonneur 30 par le circuit d'adressage 66 qui permet d'envoyer le pixel analogique sélectionné au convertisseur analogique numérique 34.

Le séquenceur 38 pilote l'ensemble des fonctions, y compris le décodage. Ces fonctions comprennent notamment :

- l'adresse en lignes et en colonnes de chaque pixel de la zone photosensible,
- la remise à zéro des N pixels d'une même ligne i,
- la commande de lecture, chaque fois dans une ligne i, d'une l'image k et d'une image k+1,
- la commande de conversion par le convertisseur analogique-numérique 34,
- la synchronisation du convertisseur numérique-analogique 36 pour programmation du seuil,
- et la commande de l'échantillonneur-bloqueur 30,
- la synchronisation du décodeur permettant de générer l'adresse moyenne à partir des adresses provenant des circuits 58 et 60.
    Le dispositif peut encore comporter des moyens permettant d'effectuer un test de validation et de caractérisation de la matrice, disposés sur le même substrat que la matrice de sites photosensibles , pratiquement intégrés à elle et partageant les moyens de lecture de ces sites. Ces moyens peuvent être prévus pour des tests
- fonction par fonction et
- sur l'ensemble.

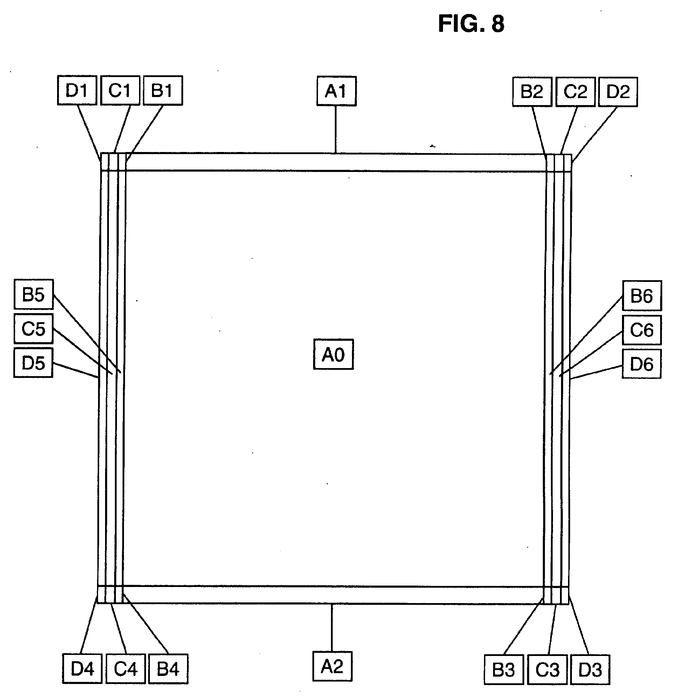

De tels moyens sont donnés à titre d'exemple sur la figure 8. Ces moyens comportent alors plusieurs zones s'ajoutant à la zone de sites photosensibles. Chacune de ces zones supplémentaires est adressée par un mode particulier de pilotage de la matrice, géré par le séquenceur . Ils permettent de caractériser le « plan focal » au sol et éventuellement de vérifier le bon fonctionnement ou de calibrer en vol avec une période de récurrence définie. Dans le cas illustré les zones supplémentaires comprennent cinq lignes de sites « masqués, c'est à dire non sensibles à la lumière incidente, en haut et en bas de la zone photosensible, et neuf colonnes de chaque côté.

La zone de sites photosensibles est désignée par A0 sur la figure 8 Les autres zones ont les fonctions suivantes.

  ➢*Zones A1 et A2 :*

les deux zones de 5 lignes de 2M pixels masquées en haut et en bas de la zone photosensible permettent de mesurer la performance en terme de résidu du traitement spatio-temporel. Ces lignes masquées subissent le même traitement spatio-temporel que les lignes de la zone active mais ne sont pas 'polluées' par la luminance de la scène. La mesure de la performance du traitement spatio-temporel est donc réalisable à travers les résidus donnés par les trois points de mesure en obscurité de ces 5 lignes.

  ➢ *Zones B1 à B4 :*

les quatre zones de 15 sites (5 lignes x 3 colonnes) réparties aux 4 coins de la zone photosensible A0 sont masquées et elles ne subissent pas la fonction de traitement spatial. Elles sont utilisées pour mesurer la contribution aux performances des résidus de soustraction temporelle en obscurité. Les pixels fournis passent à travers l'étage de traitement spatial pour être directement connectés à l'étage de mémorisation. Ainsi, leur valeur radiométrique est accessible. Ces zones de pixels ne sont pas reliées à l'encodeur et ne participent donc pas à l'établissement de l'adresse de la cible détectée.

➢ *Zones B5 et B6 :*

ces deux zones de chacune 3M sites sont physiquement identiques aux sites des zones B1 à B4, mais ne sont pas masquées. Elles permettent de mesurer la contribution aux performances des résidus de traitement temporel sous luminance.

➢ *Zones C1 à C4 :*

es 4 zones de 15 sites (sur 5 lignes et 3 colonnes) réparties aux 4 coins de la zone photosensible sont masquées. Elles fournissent des pixels ne subissant pas la fonction de soustraction temporelle. Ces pixels sont utilisés pour mesurer la contribution aux performances des résidus du filtrage spatial en obscurité. Ces pixels ne sont pas connectés à l'encodeur et ne participent donc pas à l'établissement de l'adresse de la cible détectée.

➢ *Zones C5 et C6 :*

les sites ou pixels de ces 2 zones sur 2M lignes et 3 colonnes sont physiquement identiques aux pixels des zones C1 à C4, mais il ne sont pas masqués. Ils permettent donc de mesurer la contribution aux performances des résidus de traitement spatial sous luminance.

➢ *Zones D1 à D4 :*

les 4 zones de 15 sites sur 5 lignes x 3 colonnes réparties aux 4 coins de la zone photosensible A0 sont des pixels masqués ne subissant ni la fonction de traitement temporel ni celle de traitement spatial. Ces pixels permettent de mesurer le courant d'obscurité, le bruit d'obscurité et la non-uniformité de signal en obscurité, dite DSNU, des pixels de la matrice.

➢ *Zones D5 et D 6 :*

ces 2 zones de 2M x 3 pixels, sur M lignes et 3 colonnes, sont physiquement identiques aux pixels des zones D1 à D4, mais ils ne sont pas masqués. Ils permettent de mesurer la non-uniformité de réponse, dite PRNU, le bruit et la dynamique des pixels de la matrice sous luminance.

**Revendications**

1.    Dispositif de détection de cible pouvant être sensiblement ponctuelle, présentant des caractéristiques radiométriques connues, ce dispositif comprenant :

un appareil optique monté sur un satellite d'observation de la terre et fournissant des images successives présentant un recouvrement mutuel dans le sens du déplacement du satellite, l'appareil optique utilisant comme capteur une matrice (12) de sites photosensibles ;
et des moyens pour analyser les images fournies par l'appareil en vue de localiser les cibles,

**caractérisé en ce que** des moyens de filtrage temporel et de filtrage spatial sont implantés sur la matrice elle même en amont de moyens de détection par comparaison des caractéristiques résultant du filtrage avec des critères extérieurs.

2.    Dispositif selon la revendication 1, **caractérisé en ce que** les moyens de filtrage temporel et spatial implantés sur le substrat effectuent des opérations en parallèle sur l'ensemble des lignes d'un couple d'images obtenues par balayage par lignes, permettant une observation continue de la scène.

3.    Dispositif selon la revendication 1 ou 2, **caractérisé en ce que** les moyens de détection sont prévus pour fournir une valeur radiométrique de la source détectée sous forme numérique.

**4.** Dispositif selon la revendication 3, **caractérisé en ce que** les moyens de détection comprennent des moyens pour compresser les informations fournies pour toute une ligne par un seuillage (32) et un encodage (35).

**5.** Dispositif selon la revendication 4, **caractérisé en ce que** les moyens de compression n'effectuent une telle compression que sur les informations représentées par un mot ayant un seul bit au niveau 1.

**6.** Dispositif selon la revendication 4, **caractérisé par** des moyens de filtrage numérique effectuant un double codage de lignes, comprenant la détection du premier bit au niveau 1 à partir de la gauche, la détection du premier bit au niveau 1 à partir de la droite et les calculs de l'adresse du pixel médian entre les deux pixels précédemment détectés.

**7.** Dispositif selon la revendication 6, **caractérisé en ce que** l'adresse du pixel médian est envoyée à un échantillonneur bloqueur (30) mémorisant la radiométrie de tous les sites d'une même ligne pour provoquer la lecture du dit site médian et son envoi à un convertisseur analogique-numérique fournissant une valeur de sortie.

**8.** Dispositif selon l'une quelconque des revendications précédentes, **caractérisé en ce que** les dits moyens comportent, en aval de la matrice (12) prévue pour un traitement temporel des pixels au niveau de chaque site photosensible, un circuit de lecture (24) permettant d'adresser les informations obtenues par la fonction de filtrage temporel à un circuit d'adressage de colonne (26) transférant les informations à un circuit de traitement spatial (28) implanté sur le substrat de la matrice, un échantillonneur-bloqueur (30) remplissant également un rôle de multiplexeur, un étage (32) de discrimination par seuillage, un convertisseur analogique-numérique (34) de fourniture de la valeur radiométrique ainsi qu'un séquenceur (38) commandant la succession des opérations.

**9.** Dispositif selon l'une quelconque des revendications précédentes, **caractérisé en ce que** la matrice comporte, en plus des sites photosensibles de détection, des zones de pixels masqués permettant de mesurer le résidu du traitement spatio-temporel, le résidu de soustraction temporelle en obscurité, le résidu de traitement spatial en obscurité et/ou le courant d'obscurité.

**10.** Dispositif selon l'une quelconque des revendications précédentes, **caractérisé en ce que** la matrice comporte également des zones de pixels non masqués permettant de mesurer la contribution des résidus de traitement temporel sous luminance, la contribution des résidus de traitement spatial sous luminance et/ou le bruit et la dynamique des sites photosensibles sous luminance.

**FIG. 1**

**FIG. 6**

EP 1 329 846 A1

FIG. 2

Image k          Image k+1

$t_1$  $t_2$  $t_3$

Ligne 1
Ligne 2
Ligne 3

$\dfrac{Tint}{M}$

xM lignes

10

# FIG.3.

TEMPS

Tint | Tint

1 — LIGNE 1, IMAGE k | 1, k+1 | 1, k+2 | 1, k+3

2

3

4

5 — 46

6 — 48 — TRAITEMENT DES IMAGES K-1/K-2 | TRAITEMENT DES IMAGES K/K+1

7 — LIGNE 2, IMAGE K | 2, K+1

8 — LIGNE 3, IMAGE K | 3, K+1

2.Tint

f

9 (LIGNE M) — LIGNE M, IMAGE K | LIGNE M, IMAGE K+1

Tint/M

EP 1 329 846 A1

LIGNES DE N SITES

FIG.4.

$Pix(i-1,j)-Pix(i-2,j)$

$[-Pix(i-2,j)+2Pix(i-1,j)-Pix(i,j)]$

N COLONNES

EP 1 329 846 A1

FIG.5.

LIGNES

δλ

3 × N CELLULES

12

ADRESS. LIGNE

j+4  j+3  j+2

18   16

M LIGNES

RAZ L j+1 ECHANT.    RAZ L j ECHANT.    RAZ L j-1 ECHANT.

Pix(i-2j+1)   Pix(i-2j)

Pix(i-1j+1)   Pix(i-1j)

N COLONNES

# FIG.7.

RADIOMETRIE
DU SITE @ MOY

# FIG. 8

**Office européen des brevets**

**RAPPORT DE RECHERCHE EUROPEENNE**

Numéro de la demande

EP 02 29 0111

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| Y | US 4 991 109 A (CROOKSHANKS REX J) 5 février 1991 (1991-02-05) | 1-3 | G06T1/00 |
| A | * abrégé * <br> * colonne 1, ligne 15 - ligne 30 * <br> * colonne 2, ligne 55 - colonne 4, ligne 4 * <br> * colonne 9, ligne 8 - colonne 10, ligne 26 * <br> * colonne 11, ligne 36 - ligne 41 * <br> * figures 1,11 * | 4-10 | |
| Y | US 3 970 990 A (CARSON JOHN C) 20 juillet 1976 (1976-07-20) | 1-3 | |
| A | * abrégé * <br> * colonne 1, ligne 14 - ligne 68 * <br> * colonne 6, ligne 60 - colonne 8, ligne 57 * <br> * colonne 12, ligne 42 - ligne 43 * <br> * figures 1,2,6,16 * | 4-10 | |
| A | CAT H H ET AL: "SIMPil: an OE integrated SIMD architecture for focal plane processing applications" MASSIVELY PARALLEL PROCESSING USING OPTICAL INTERCONNECTIONS, 1996., PROCEEDINGS OF THE THIRD INTERNATIONAL CONFERENCE ON MAUI, HI, USA 27-29 OCT. 1996, LOS ALAMITOS, CA, USA,IEEE COMPUT. SOC, US, 27 octobre 1996 (1996-10-27), pages 44-52, XP010201898 ISBN: 0-8186-7591-8 * abrégé * <br> * page 44, colonne de gauche, dernier alinéa - page 44, colonne de droite, alinéa 1 * <br> * page 45, colonne de gauche, alinéa 2 * <br> * figure 1 * | 1 | DOMAINES TECHNIQUES RECHERCHES (Int.Cl.7) <br><br> G06T <br> H04N |

-/--

Le présent rapport a été établi pour toutes les revendications

| Lieu de la recherche | Date d'achèvement de la recherche | Examinateur |
|---|---|---|
| MUNICH | 21 juin 2002 | Engels, A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

Office européen
des brevets

**RAPPORT DE RECHERCHE EUROPEENNE**

Numéro de la demande

EP 02 29 0111

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | EP 0 573 309 A (TRW INC)<br>8 décembre 1993 (1993-12-08)<br>* colonne 1, ligne 12 - ligne 26 *<br>* colonne 2, ligne 13 - ligne 22 *<br>* colonne 3, ligne 9 - ligne 31 *<br>----- | 1-10 | |
| | | | **DOMAINES TECHNIQUES RECHERCHES (Int.Cl.7)** |

Le présent rapport a été établi pour toutes les revendications

| Lieu de la recherche | Date d'achèvement de la recherche | Examinateur |
|---|---|---|
| MUNICH | 21 juin 2002 | Engels, A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.........................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**  EP 02 29 0111

La présente annexe indique les membres de la famille de brevets relatifs aux documents brevets cités dans le rapport de recherche européenne visé ci–dessus.
Lesdits members sont contenus au fichier informatique de l'Office européen des brevets à la date du
Les renseignements fournis sont donnés à titre indicatif et n'engagent pas la responsabilité de l'Office européen des brevets.

21-06-2002

| Document brevet cité au rapport de recherche | | Date de publication | Membre(s) de la famille de brevet(s) | | Date de publication |
|---|---|---|---|---|---|
| US 4991109 | A | 05-02-1991 | US | 4809194 A | 28-02-1989 |
| | | | US | 5175802 A | 29-12-1992 |
| | | | US | 4991111 A | 05-02-1991 |
| | | | US | 4991127 A | 05-02-1991 |
| US 3970990 | A | 20-07-1976 | US | 3852714 A | 03-12-1974 |
| EP 0573309 | A | 08-12-1993 | US | 5329595 A | 12-07-1994 |
| | | | DE | 69320259 D1 | 17-09-1998 |
| | | | DE | 69320259 T2 | 21-01-1999 |
| | | | EP | 0573309 A1 | 08-12-1993 |
| | | | JP | 3091807 B2 | 25-09-2000 |
| | | | JP | 6317470 A | 15-11-1994 |

EPO FORM P0460

Pour tout renseignement concernant cette annexe : voir Journal Officiel de l'Office européen des brevets, No.12/82